# EUROPEAN PATENT APPLICATION

(11) **EP 4 425 023 A1**
(43) Date of publication of application: **04.09.2024**
(21) Application number: 22886445.0
(22) Date of filing: 30.08.2022
(51) Int. Cl.: F16L 11/08, B32B 1/08, B32B 27/40

(54) **MARINE HOSE AND METHOD FOR MANUFACTURING SAME**

(30) Priority: 28.10.2021 JP 2021176637
(71) Applicant: The Yokohama Rubber Co., Ltd., Hiratsuka-shi, Kanagawa 254-8601 (JP)
(72) Inventor: NISHI Takaaki, Hiratsuka-shi, Kanagawa 254-8601 (JP); TAMADA Yoshinori, Hiratsuka-shi, Kanagawa 254-8601 (JP); TORIUMI Shuichi, Hiratsuka-shi, Kanagawa 254-8601 (JP)
(74) Representative: Grünecker Patent- und Rechtsanwälte PartG mbB
(86) International application number: PCT/JP2022/032554
(87) International publication number: WO 2023/074111

(57) **Abstract**

To provide a marine hose including a urethane layer having a good wear resistance and a desired thickness on the outermost circumferential surface of the marine hose, which can increase the productivity of the marine hose, and a method for manufacturing the marine hose. A urethane layer (10) having a desired thickness and having a multilayer structure in which a urethane inner circumferential layer (11a) and a urethane outer circumferential layer (12) are layered in sequence is provided on an outer circumferential surface of a main hose body (3) subjected to vulcanization by vulcanizing the main hose body (3) and forming a sheet-shaped material (11T) made of a rubber composition containing millable urethane polymer into a urethane inner circumferential layer (11) by steam-vulcanizing, in a vulcanizer (4), a formed body obtained by layering the sheet-shaped material (11T) on the outer circumferential surface having a cylindrical shape in which reinforcing layers (5, 6, 7) are embedded between an inner surface layer (4) having a cylindrical shape and being unvulcanized and a cover layer (9), and by forming a liquid material (12T) made of a rubber composition containing castable urethane polymer into the urethane outer circumferential layer (12) by applying the liquid material (12T) on an outer circumferential surface of the urethane inner circumferential layer (11) and aging the liquid material (12T).

## Description

### Technical Field

The present invention relates to a marine hose and a method for manufacturing the marine hose, and particularly relates to a marine hose having a good wear resistance and including a urethane layer of a desired thickness on the outermost circumferential surface thereof, which can increase the productivity of the marine hose, and a method for manufacturing the marine hose.

Marine hoses are used to transport fluids such as crude oil by sea (see, for example, Patent Document 1). Some marine hoses include a urethane layer at the outermost circumferential surface so as to reduce wear of the outermost circumferential surface.

The urethane layer is formed, for example, by applying a liquid material made of a rubber composition containing castable urethane polymer to an outer circumferential surface of a main hose body and aging the liquid material. Using the rubber composition is advantageous in that a urethane layer having a good wear resistance can be formed without performing a vulcanization step. However, due to being a liquid material, the liquid material cannot be applied thickly in one application, and thus it is necessary to repeatedly apply the liquid material in order to obtain a desired thickness. In addition, a lengthy aging time is required to cure the liquid material. Therefore, there is room for improvement in increasing the productivity of a marine hose having a good wear resistance and including a urethane layer of a desired thickness on the outermost circumferential surface of the marine hose.

### Citation List

### Patent Literature

Patent Document 1: JP 2014-122672 A

### Summary of Invention

### Technical Problem

An object of the present invention is to provide a marine hose including a urethane layer having a good wear resistance and a desired thickness on the outermost circumferential surface of the marine hose, which can increase the productivity of the marine hose, and a method for manufacturing the marine hose.

### Solution to Problem

In order to achieve the above-described object, a marine hose of the present invention is a marine hose including a urethane layer on an outermost circumferential surface, wherein the urethane layer has a multilayer structure of a urethane outer circumferential layer made of a rubber composition containing castable urethane polymer and a urethane inner circumferential layer made of a rubber composition containing millable urethane polymer and disposed on an inner circumferential side of the urethane outer circumferential layer.

A method for manufacturing a marine hose of the present invention is a method for manufacturing a marine hose including a urethane layer on an outermost circumferential surface, the urethane layer having a multilayer structure in which a urethane inner circumferential layer and a urethane outer circumferential layer are layered in sequence, the method being configured to provide the urethane layer on an outer circumferential surface of a main hose body subjected to vulcanization by
forming the main hose body having a cylindrical shape in which a reinforcing layer having a cylindrical shape is embedded between an inner surface layer having a cylindrical shape and being unvulcanized and a cover layer,
vulcanizing the main hose body and forming a sheet-shaped material into the urethane inner circumferential layer by placing a formed body in a vulcanizer and steam-vulcanizing the formed body, the sheet-shaped material being made of a rubber composition containing millable urethane polymer, the formed body being obtained by layering the sheet-shaped material on an outer circumferential surface of the main hose body, and
forming a liquid material into the urethane outer circumferential layer by applying the liquid material on an outer circumferential surface of the urethane inner circumferential layer and aging the liquid material, the liquid material being made of a rubber composition containing castable urethane polymer.

### Advantageous Effects of Invention

According to the present invention, the urethane inner circumferential layer can be formed by layering and steam-vulcanizing the sheet-shaped material made of the rubber composition containing millable urethane polymer, which is advantageous in obtaining an arbitrary layer thickness in a short time. The urethane outer circumferential layer can be formed by applying and aging the liquid material made of the rubber composition containing castable urethane polymer, and thus an excellent wear resistance can be secured. Therefore, by forming the urethane layer in a multilayer structure of the urethane outer circumferential layer and the urethane inner circumferential layer, the outer circumferential surface of the urethane layer can have an excellent wear resistance, and the urethane layer can be easily formed to have a desired thickness. This is advantageous in manufacturing a marine hose including a urethane layer having a good wear resistance and a desired thickness on the outermost circumferential surface with high productivity.

### Brief Description of Drawings

FIG. 1 is an explanatory diagram illustrating a marine hose according to an embodiment of the present invention.
FIG. 2 is an explanatory diagram illustrating an upper half around one end portion in a longitudinal direction of the marine hose in FIG. 1 enlarged in a longitudinal cross-sectional view.
FIG. 3 is an explanatory diagram illustrating a transverse cross-section structure of the marine hose in a cross-sectional view taken along A-A of FIG. 1.
FIG. 4 is an explanatory diagram illustrating a periphery of a urethane layer in FIG. 3 enlarged in a longitudinal cross-sectional view.
FIG. 5 is an explanatory diagram illustrating a modified example of the urethane layer in FIG. 4.
FIG. 6 is an explanatory diagram illustrating a step of layering a sheet-shaped material on an outer circumferential surface of a main hose body in manufacturing the marine hose of FIG. 1.
FIG. 7 is an explanatory diagram illustrating a step of steam-vulcanizing the main hose body on which the sheet-shaped material of FIG. 6 is layered.
FIG. 8 is an explanatory diagram illustrating the main hose body and a urethane inner circumferential layer vulcanized by the step of FIG. 7.
FIG. 9 is an explanatory diagram illustrating a step of applying a liquid material to an outer circumferential surface of the urethane inner circumferential layer of FIG. 8.

### Description of Embodiments

A marine hose and a method for manufacturing the marine hose according to embodiments of the present invention will be described below with reference to the drawing.

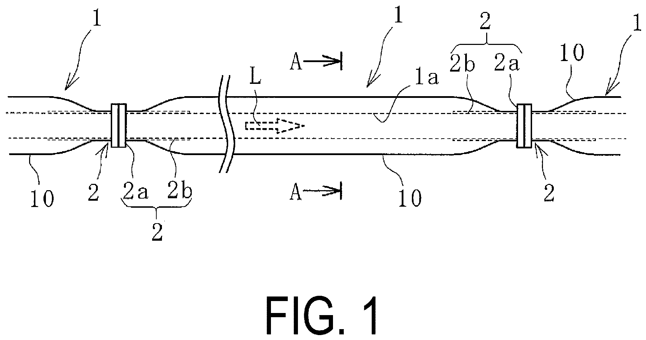

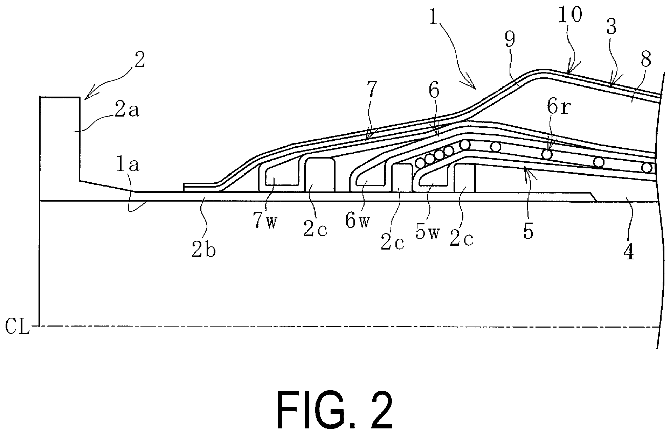

The embodiment of a marine hose 1 illustrated in FIGS. 1 to 4 includes a main hose body 3 in which reinforcing layer groups 5, 6, and 7 are embedded between an inner surface layer 4 having a cylindrical shape and a cover layer 9, and a urethane layer 10 layered on an outer circumferential surface of the main hose body 3. The outermost layer surface of the marine hose 1 is the urethane layer 10. The reinforcing layer groups 6 and 7 can be provided as appropriate according to a pressure resistance performance required for the marine hose 1.

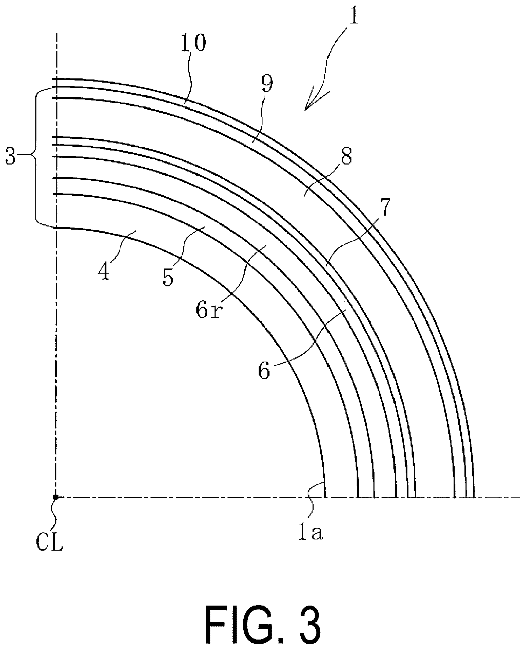

A connecting end portion 2 for connecting another marine hose 1 is provided at both longitudinal ends of the marine hose 1. The connecting end portion 2 includes a nipple 2b extending in the longitudinal direction of the marine hose 1 and a flange 2a joined to one end of the nipple 2b in the longitudinal direction. For example, about 8 to 10 marine hoses 1 are typically connected and used. A dot-dash line CL in the drawings is a center line extending in a hose longitudinal direction through the cross-sectional center of the marine hose 1. Although FIG. 3 illustrates a range of one-quarter of the transverse cross-section of the marine hose 1 and the other range not illustrated (a range of three-quarters) also has the same structure.

To be more specific, in the main hose body 3 extending between the respective connecting end portions 2, the inner surface layer 4, an inner first reinforcing layer group 5, a reinforcing wire layer 6r, an inner second reinforcing layer group 6, an outer reinforcing layer group 7, a buoyant layer 8, and the cover layer 9 are coaxially layered in this order from an inner circumferential side around a flow path 1a having a cylindrical shape (that is, around a center line CL). The inner first reinforcing layer group 5, the inner second reinforcing layer group 6, and the outer reinforcing layer group 7 are fixed to the nipple 2b by nipple wires 5w, 6w, and 7w at respective one end portions and fixing rings 2c disposed so as to project from the outer circumferential surface of the nipple 2b.

The inner circumferential surface of the inner surface layer 4 constitutes the flow path 1a for a fluid L. Examples of the fluid L include crude oil, gasoline, and LPG. An appropriate material is used for the inner surface layer 4 according to the type of the fluid L. In a case where the fluid L is crude oil or the like, the inner surface layer 4 is formed of nitrile rubber or the like having an excellent oil resistance.

The inner first reinforcing layer group 5 includes a plurality of cord reinforcing layers layered. The number of cord reinforcing layers is appropriately set to the required number, for example, about four or more and thirty or less. Each of the cord reinforcing layers includes a large number of rubber-coated reinforcing cords arranged side by side.

In each of the cord reinforcing layers, the large number of reinforcing cords extend inclined at a predetermined angle with respect to the center line CL. The reinforcing cords of the cord reinforcing layers layered vertically adjacent to each other intersect with opposite inclination directions. The reinforcing cord to be used includes a resin fiber cord made from polyester, polyketone, aramid, vinylon, nylon, or the like or a steel cord, which is usually used in the marine hose.

Each of the cord reinforcing layers is covered with a thin rubber layer for adhesion, and the cord reinforcing layers adjacently layered are bonded via the thin rubber layer. The inner circumferential surface of the inner first reinforcing layer group 5 and the outer circumferential surface of the inner surface layer 4 are bonded in contact with each other.

The reinforcing wire layer 6r is formed by spirally winding reinforcing wires around the outer circumferential surface of the inner first reinforcing layer group 5 at predetermined intervals in the longitudinal direction of the marine hose 1. The reinforcing wire layer 6r is also covered with a rubber layer for adhesion. The outer circumferential surface of the inner first reinforcing layer group 5 and the outer circumferential surface of the reinforcing wire layer 6r are bonded in contact with each other. The reinforcing wire layer 6r can be optionally provided. The reinforcing wire layer 6r can also be disposed in the inner first reinforcing layer group 5.

The inner second reinforcing layer group 6 and the outer reinforcing layer group 7 each have substantially the same structure as the structure of the inner first reinforcing layer group 5 and include a plurality of cord reinforcing layers layered. The inner circumferential surface of the inner second reinforcing layer group 6 and the outer circumferential surface of the reinforcing wire layer 6r are bonded in contact with each other. The outer reinforcing layer group 7 is a reinforcing layer that supports the inner reinforcing layer groups 5 and 6, and resists an impact force (internal pressure) generated in the marine hose 1 when the inner reinforcing layer groups 5 and 6 are damaged. The inner circumferential surface of the outer reinforcing layer group 7 and the outer circumferential surface of the inner second reinforcing layer group 6 are bonded in contact with each other.

The buoyant layer 8 is formed of a material that exhibits buoyancy to float the marine hose 1 on the sea, such as sponge rubber or polyurethane foam. The layer thickness of the buoyant layer 8 (layer thickness other than both longitudinal end portions) varies depending on, for example, the size of and the buoyancy required for the marine hose 1 and is, for example, about 60 mm or more and 300 mm or less. The outer circumferential surface of the outer reinforcing layer group 7 and the inner circumferential surface of the buoyant layer 8 are bonded in contact with each other. This marine hose 1 is of a floating type and thus is provided with the buoyant layer 8. However, in the case of a marine hose 1 of a submarine type, the buoyant layer 8 is omitted.

The cover layer 9 is formed of a non-water-permeable material such as rubber. The outer circumferential surface of the buoyant layer 8 and the inner circumferential surface of the cover layer 9 are bonded in contact with each other, and the outer circumferential surface of the cover layer 9 and the inner circumferential surface of the urethane layer 10 are bonded in contact with each other. In order to ensure a good bonding performance with the urethane layer 10, the cover layer 9 is preferably made of NBR rubber having a good adhesion to urethane as a main component.

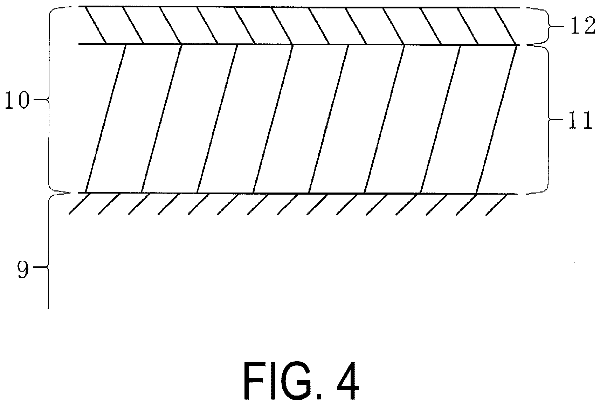

As illustrated in FIG. 4, the urethane layer 10 has a multilayer structure of a urethane outer circumferential layer 12 and a urethane inner circumferential layer 11. The layer thickness of the urethane layer 10 is, for example, 3 mm or more and 10 mm or less. In this embodiment, the urethane layer 10 extends continuously over the entire length of the main hose body 3, but may be provided only in a necessary range of the main hose body 3 in the longitudinal direction. For example, the urethane layer 10 is provided only at both end portions of the main hose body 3 in the longitudinal direction where wear is most severe, or at least in a range including at least both end portions.

The urethane inner circumferential layer 11 is layered on the outer circumferential surface of the main hose body 3 (the cover layer 9). The urethane inner circumferential layer 11 is formed by curing a rubber composition containing millable urethane polymer. The rubber composition containing millable urethane polymer before curing is cured by vulcanization similarly to a general unvulcanized rubber.

As the rubber composition containing millable urethane polymer, various types of known rubber compositions can be used. The formulation of this composition is, for example, 100 parts by mass of urethane polymer, 50 parts by mass of carbon black or silica, 30 parts by mass of a plasticizer, and 5 parts by mass of a vulcanizing agent. The type of urethane polymer, the type of a compounding agent, and the compounding ratio thereof are determined as appropriate according to a required durability (wear resistance) and the like.

The layer thickness of the urethane inner circumferential layer 11 is, for example, 2 mm or more, and equal to or larger than the layer thickness of the urethane outer circumferential layer 12. More preferably, the layer thickness of the urethane inner circumferential layer 11 is 60% or more of the layer thickness of the urethane layer 10.

The urethane outer circumferential layer 12 is layered on the outer circumferential surface of the urethane inner circumferential layer 11, and the outer circumferential surface of the urethane inner circumferential layer 11 and the inner circumferential surface of the urethane outer circumferential layer 12 are bonded in contact with each other. The urethane outer circumferential layer 12 is formed by curing a rubber composition containing castable urethane polymer. Since the rubber composition containing liquid millable urethane polymer is cured by aging (curing) at a room temperature, a vulcanization step for curing is not necessary. The layer thickness of the urethane outer circumferential layer 12 is, for example, 0.5 mm or more and 2 mm or less.

As the rubber composition containing millable urethane polymer, various types of known rubber compositions can be used. The formulation of this composition is, for example, 100 parts by mass of urethane polymer, 50 parts by mass of carbon black or silica, 30 parts by mass of a plasticizer, and 5 parts by mass of a vulcanizing agent. The type of urethane polymer, the type of a compounding agent, and the compounding ratio thereof are determined as appropriate according to a required durability (wear resistance) and the like.

The color of the urethane outer circumferential layer 12 and the color of the urethane inner circumferential layer 11 layered adjacent to the urethane outer circumferential layer 12 may be the same or different. When their colors are made different from each other, at least one of their hue, saturation, and brightness is made different from each other so as to be easily distinguished at a glance. For example, one may be red, orange, or yellow in color, and the other may be black, gray, brown, or blue in color.

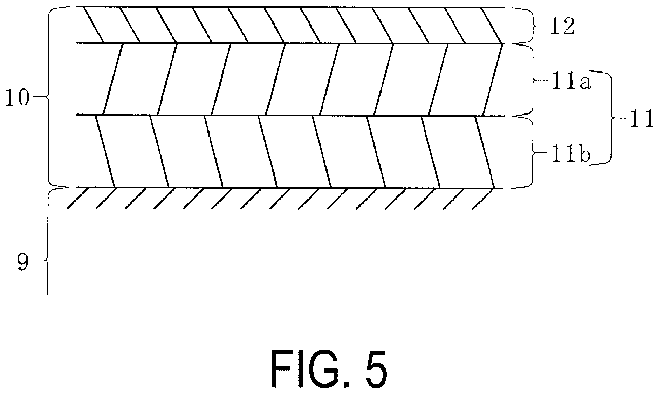

As illustrated in FIG. 5, the urethane inner circumferential layer 11 may have a multilayer structure in which a plurality of layers 11a and 11b having different colors are layered. For example, at least one of hue, saturation, and brightness is made different between the urethane inner circumferential layers 11a and 11b so that the urethane inner circumferential layers 11a and 11b can be easily distinguished at a glance. For example, one may be red, orange, or yellow in color, and the other may be black, gray, brown, or blue in color. In that case, the urethane inner circumferential layer 11b on the inner circumferential side preferably has a color that is easily distinguished also from the color of the urethane outer circumferential layer 12 at a glance.

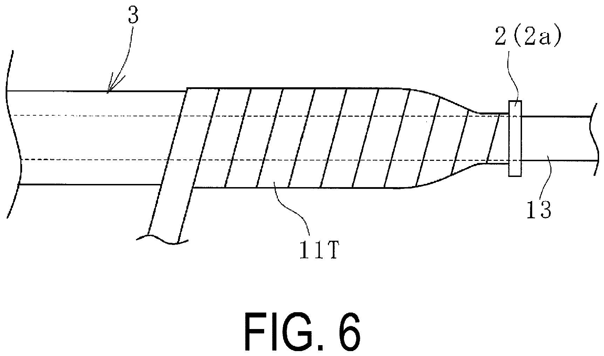

Next, an example of a procedure for manufacturing the marine hose 1 will be described with reference to FIGS. 6 to 9.

In the manufacturing process of the marine hose 1, materials for forming the inner surface layer 4, the inner first reinforcing layer group 5, the reinforcing wire layer 6r, the inner second reinforcing layer group 6, the outer reinforcing layer group 7, the buoyant layer 8, and the cover layer 9 are coaxially layered in this order on the outer circumferential side of a mandrel 13 to which the connecting end portions 2 are externally fitted. As a result, the main hose body 3 having a cylindrical shape in which the reinforcing layers 5, 6, and 7 having a cylindrical shape are embedded between the inner surface layer 4 having a cylindrical shape and being unvulcanized and the cover layer 9 is formed.

Next, as illustrated in FIG. 6, a sheet-shaped material 11T made of a rubber composition containing unvulcanized millable urethane polymer is layered on the outer circumferential surface of the main hose body 3 formed into a cylindrical shape so as to form a formed body. The sheet-shaped material 11T having a predetermined thickness may be spirally wound over a necessary range of the outer circumferential surface of the main hose body 3 (the cover layer 9). The sheet-shaped material 11T having a predetermined thickness is used in accordance with the layer thickness of the urethane inner circumferential layer 11 to be formed. When the layer thickness of the urethane inner circumferential layer 11 is large, the sheet-shaped material 11T having a predetermined thickness may be overlappedly wound a plurality of turns or, alternatively, the predetermined thickness of the sheet-shaped material 11T may be increased up to about 10 mm.

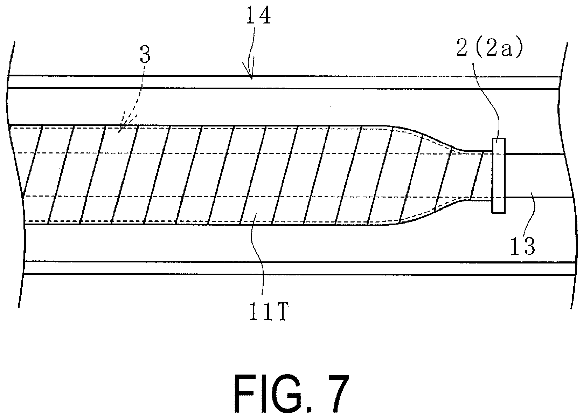

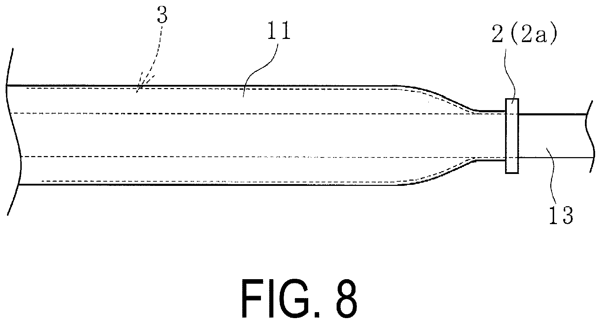

Next, as illustrated in FIG. 7, the formed body in which the sheet-shaped material 11T is layered on the outer circumferential surface of the main hose body 3 having a cylindrical shape is placed in a vulcanizer 14 and steam-vulcanized. By this vulcanization step, as illustrated in FIG. 8, the main hose body 3 is vulcanized and the sheet-shaped material 11T is cured to form the urethane inner circumferential layer 11.

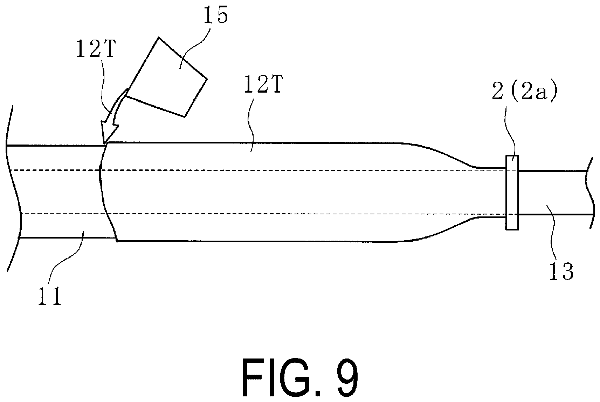

Next, as illustrated in FIG. 9, a liquid material 12T made of a rubber composition containing castable urethane polymer is supplied from a vessel 15, applied to the outer circumferential surface of the urethane inner circumferential layer 11 having been formed, and aged at a room temperature. The coating thickness of the liquid material 12T is adjusted according to the layer thickness of the urethane outer circumferential layer 12 to be formed. When the layer thickness of the urethane outer circumferential layer 12 is large, the operation of applying the liquid material 12T is repeated to obtain the layer thickness of the urethane outer circumferential layer 12. The maximum coating thickness of the liquid material 12T that can be obtained by one application is about 1.0 mm.

Through a lapse of a predetermined aging time, the liquid material 12T is cured to form the urethane outer circumferential layer 12. As a result, the urethane layer 10 having a multilayer structure in which the urethane inner circumferential layer 11 and the urethane outer circumferential layer 12 are coaxially layered in sequence is formed on the outer circumferential surface of the main hose body 3 (the cover layer 9) having been vulcanized, whereby the marine hose 1 illustrated in FIGS. 1 to 4 is completed.

According to the marine hose 1, the urethane inner circumferential layer 11 can be formed by layering and steam-vulcanizing the sheet-shaped material 11T made of a rubber composition containing millable urethane polymer. The time required for layering the sheet-shaped material 11T having a predetermined thickness can be set to about 5 to 10 minutes per one marine hose 1. The time required for the vulcanization of the sheet-shaped material 11T does not constitute an additional time because the vulcanization of the sheet-shaped material 11T is performed simultaneously with the vulcanization of the other materials.

On the other hand, when the urethane layer 10 is formed by using a rubber composition containing castable urethane polymer, it takes a long time to apply and age the liquid material 12T. For example, it takes about one hour to form the urethane layer 10 having a layer thickness of 1.0 mm on one marine hose 1. In addition, a highly-skilled operator is needed to apply the liquid material 12T in a uniform layer thickness. Therefore, the use of the rubber composition containing millable urethane polymer is advantageous in obtaining the urethane layer 10 (the urethane inner circumferential layer 11) having an arbitrary layer thickness in a short time.

The urethane outer circumferential layer 12 can be formed by applying and aging the liquid material 12T made of a rubber composition containing castable urethane polymer, and thus an excellent wear resistance can be secured. When the urethane layer 10 is formed using a rubber composition containing millable urethane polymer, there is a risk that the wear resistance of the urethane layer 10 decreases because urethane is hydrolyzed by steam vulcanization. This risk can be avoided with the urethane outer circumferential layer 12 formed using the liquid material 12T.

Therefore, by forming the urethane layer 10 in a multilayer structure of the urethane outer circumferential layer 12 and the urethane inner circumferential layer 11, the urethane layer 10 can be easily formed to have a desired thickness and the outer circumferential surface of the urethane layer 10 can have an excellent wear resistance. This is advantageous in manufacturing the marine hose 1 including the urethane layer 10 having a good wear resistance and a desired thickness on the outermost circumferential surface with high productivity.

When the layer thickness of the urethane outer circumferential layer 12 is 1.0 mm or less, the application of the liquid material 12T can be finished in only one application step when forming the urethane outer circumferential layer 12 having this layer thickness, which is further advantageous in shortening a forming time, and the productivity is further improved. In order to shorten the forming time, the layer thickness of the urethane outer circumferential layer 12 is more preferably 1 mm or less.

The urethane inner circumferential layer 11 is exposed when the urethane outer circumferential layer 12 is completely worn in the thickness direction. Thus, when the color of the urethane outer circumferential layer 12 and the color of the urethane inner circumferential layer 11 layered adjacent to the urethane outer circumferential layer 12 are different from each other, the degree of wear of the urethane layer 10 can be easily grasped at a glance.

As illustrated in FIG. 5, when the urethane inner circumferential layer 11 has a multilayer structure in which the plurality of layers 11a and 11b having different colors are layered, the urethane inner circumferential layer 11b on the inner circumferential side is exposed when the urethane inner circumferential layer 11a on the outer circumferential side is completely worn in the thickness direction. Therefore, when the urethane inner circumferential layer 11 has a multilayer structure in which the plurality of layers 11a and 11b having different colors are layered, the degree of wear of the urethane layer 10 can be easily grasped.

### Examples

Two types of marine hoses were produced in which the outer diameter of a main hose body was set to 830 mm and a urethane layer having a layer thickness of 4.5 mm was provided over the entire length of the outer circumferential surface of the main hose body. In one marine hose (Example), the urethane layer was formed to have a multilayer structure of a urethane outer circumferential layer (layer thickness: 1.5 mm) made of a rubber composition containing castable urethane polymer and a urethane inner circumferential layer (layer thickness: 3 mm) made of a rubber composition containing millable urethane polymer and disposed on the inner circumferential side of the urethane outer circumferential layer as illustrated in FIG. 4. In the other marine hose (Comparative Example), the urethane layer was formed to have a single layer structure of a rubber composition containing castable urethane polymer. When the time required from the formation of the urethane layer to the completion of the manufacturing of the marine hose 1 was compared, the time in Example was about 30% of the time in Comparative Example.

### Reference Signs List

1 Marine hose
1a Flow path
2 Connecting end portion
2a Flange
2b Nipple
2c Fixing ring
3 Main hose body
4 Inner surface layer
5 Inner first reinforcing layer group 5w Nipple wire
6 Inner second reinforcing layer group 6r Reinforcing wire layer 6w Nipple wire
7 Outer reinforcing layer group 7w Nipple wire
8 Buoyant layer
9 Cover layer
10 Urethane layer
11, 11a, 11b Urethane inner circumferential layer
11T Sheet-shaped material
12 Urethane outer circumferential layer
12T Liquid material
13 Mandrel
14 Vulcanizer
15 Vessel
L Fluid

## Claims

1. A marine hose comprising:
a urethane layer on an outermost circumferential surface,
the urethane layer having a multilayer structure of a urethane outer circumferential layer and a urethane inner circumferential layer disposed on an inner circumferential side of the urethane outer circumferential layer, the urethane outer circumferential layer being made of a rubber composition containing castable urethane polymer, the urethane inner circumferential layer being made of a rubber composition containing millable urethane polymer.

2. The marine hose according to claim 1, wherein a color of the urethane outer circumferential layer is different from a color of the urethane inner circumferential layer layered adjacent to the urethane outer circumferential layer.

3. The marine hose according to claim 1 or 2, wherein the urethane inner circumferential layer has a multilayer structure in which a plurality of layers having different colors are layered.

4. The marine hose according to any one of claims 1 to 3, wherein the urethane layer is layered on an outer circumferential surface of a rubber layer containing NBR rubber as a main component.

5. The marine hose according to any one of claims 1 to 4, wherein the urethane outer circumferential layer has a layer thickness of 1.5 mm or less.

6. A method for manufacturing a marine hose, the marine hose comprising a urethane layer on an outermost circumferential surface, the urethane layer having a multilayer structure in which a urethane inner circumferential layer and a urethane outer circumferential layer are layered in sequence, the method being configured to provide the urethane layer on an outer circumferential surface of a main hose body subjected to vulcanization by
forming the main hose body having a cylindrical shape in which a reinforcing layer having a cylindrical shape is embedded between an inner surface layer having a cylindrical shape and being unvulcanized and a cover layer,
vulcanizing the main hose body and forming a sheet-shaped material into the urethane inner circumferential layer by placing a formed body in a vulcanizer and steam-vulcanizing the formed body, the sheet-shaped material being made of a rubber composition containing millable urethane polymer, the formed body being obtained by layering the sheet-shaped material on an outer circumferential surface of the main hose body, and
forming a liquid material into the urethane outer circumferential layer by applying the liquid material on an outer circumferential surface of the urethane inner circumferential layer and aging the liquid material, the liquid material being made of a rubber composition containing castable urethane polymer.
